# EUROPÄISCHE PATENTSCHRIFT

(11) **EP 2 436 948 B1**
(45) Veröffentlichungstag und Bekanntmachung des Hinweises auf die Patenterteilung: **20.06.2018**
(21) Anmeldenummer: 11006742.8
(22) Anmeldetag: 18.08.2011
(51) Int. Cl.: F16F 13/10

(54) **Hydrolager**
Hydraulic support
Couche hydraulique

(30) Priorität: 29.09.2010 DE 102010046885
(43) Veröffentlichungstag der Anmeldung: 04.04.2012
(73) Patentinhaber: Vibracoustic GmbH, 64293 Darmstadt (DE)
(72) Erfinder: Hirsch, Volker, Dr., 67346 Speyer (DE); Simuttis, Arnold, Dr., 55545 Bad Kreuznach (DE)
(74) Vertreter: Flügel Preissner Schober Seidel

(56) Entgegenhaltungen:
- EP-A1- 1 628 040
- EP-A2- 1 336 771
- FR-A1- 2 916 503

## Beschreibung

### Technisches Gebiet

Die Erfindung betrifft ein Hydrolager und insbesondere ein Hydrolager mit einem neuen, kostengünstigen Montagekonzept.

### Stand der Technik

In EP 1 628 040 A1 ist ein hydraulisch dämpfendes Lager beschrieben, bei dem ein inneres Lager bestehend aus Tragfeder, Entkoppelungssystem, Rollbalg und Deckel durch Verklipsen des Deckels mit dem Außenring vormontiert wird. Danach wird dieses innere Lager von unten in ein Aluminium-Druckguss-Flanschgehäuse hineingeschoben. Dieses Gehäuse ist so gestaltet, dass es extreme Kräfte in alle Richtungen übertragen kann. Damit eine feste Verbindung zwischen innerem Lager und dem Gehäuse entsteht, wird ein vorstehender Rand des Aluminium-Guss-Gehäuses so umgeformt, dass er außenliegende Deckelbereiche des inneren Lagers umschließt und dabei sehr hohe Kräfte übertragen kann.

In WO 2008/152284 A1 wird ein inneres Lager seitlich in ein Anschlaggehäuse eingeschoben und dabei verklipst. Das Anschlaggehäuse ist dabei auf die Abstützung von Kräften in vertikaler und einer horizontalen Richtung ausgelegt.

Gemäß EP 1 628 040 A1 werden für das Flanschgehäuse teure Aluminium-Druckguss-Speziallegierungen benötigt. Der Herstellungsprozess von Teilen aus diesen Legierungen muss in engen Grenzen ablaufen und ist wenig prozesssicher, so dass beim Umformen des Halterandes immer wieder Risse entstehen, wodurch Ausschussteile entstehen.

Das seitliche Einschieben des inneren Lagers in ein Gehäuse mit Verklipsung lässt nur geringe Kräfte in die Richtung zu, aus der das innere Lager eingeschoben wird. Daher gibt es auch Teile, bei welchen das Gehäuse aus Stahlteilen zusammengeschweißt und nach dem Einschieben lokal umgeformt wird. Das hohe Gewicht eines geschweißten Gehäuses kann durch die vergleichsweise kleinen Kunststoffkomponenten des inneren Lagers nur unzureichend kompensiert werden. Die Herstellung solcher Teile ist durch unterschiedliche Montagerichtungen erschwert und erfordert hohe Investitionen in die Einrichtungen zur Herstellung.

### Darstellung der Erfindung

Es ist die Aufgabe der Erfindung, ein prozesssicher herstellbares Hydrolager mit niedrigem Gewicht zur Verfügung zu stellen, das möglichst in alle Richtungen hohe Kräfte übertragen kann, wie sie beispielsweise bei den verschiedenen Crash-Arten auftreten. Gleichzeitig soll die Montage einfach und nur in einer Richtung prozesssicher erfolgen. Die endgültige Festigkeit des Lagers darf auch erst bei der Montage im Fahrzeug erreicht werden.

Diese Aufgabe wird erfindungsgemäß durch das im Anspruch 1 angegebene Hydrolager gelöst. Die abhängigen Ansprüche 2 bis 9 zeigen spezielle Ausführungsformen des Hydrolagers gemäß Anspruch 1.

Das erfindungsgemäße Hydrolager weist ein inneres Lager aus möglichst vielen Kunststoffteilen auf, wobei eine Verbindung zwischen einem Lagerdeckel, einem Rollbalg, einem Düsenkörper und einer Tragfeder als Kunststoffteile und einem Tragkörper durch Verklipsung des Tragkörpers mit dem Lagerdeckel erfolgt. Insbesondere weist das Hydrolager ein stabiles Anschlaggehäuse auf, das mit dem inneren Lager mittels Verklipsung verliersicher verbindbar ist und das an Befestigungsstellen z.B. mittels Schrauben mit einem Träger verbindbar ist.

Das erfindungsgemäße Hydrolager zeichnet sich insbesondere durch ein kostengünstiges Montagekonzept aus. Die Dichtigkeit des Hydrolagers wird durch die axiale Verspannung von Lagerdeckel, Rollbalg, Düsenkörper und Tragfeder erzeugt. Für den Transport, die Lagerung oder die Handhabung des Motorlagers im unverbauten Zustand erfolgt dies über eine Verklipsung ohne oder mit dem Anschlaggehäuse. Da die Klipse insbesondere unter erhöhten Temperaturen die im Betrieb des Motorlagers auftretenden dynamischen Kräfte nicht ertragen können, wird das Hydrolager bei der Montage im Fahrzeug durch dabei verwendete Befestigungselemente weiter vorgespannt. Dabei wird das Anschlaggehäuse auf einem Träger, wie einem Vorderachsträger oder dem Chassis eines Kraftfahrzeugs, festgespannt und drückt damit über einen Lagerring den Düsenkörper und den Rollbalg auf den Lagerdeckel, der auf dem Träger aufliegt. Die zur Abdichtung erforderliche Vorspannung wird durch die vielen Kunststoffteile bzw. Gummiteile im Kraftfluss aufrechterhalten. Die Klipse, die bis dahin die Dichtheit des Motorlagers gewährleistet haben, werden bei diesem Montageschritt entlastet. Sie übernehmen bei einer Demontage des Motorlagers von dem Träger wieder die für die Abdichtung erforderliche Vorspannung.

Der Vorteil der Erfindung liegt im Entfall einer Verbindungstechnik, wie beispielsweise Nieten, Verstemmen, Schrauben, Bördeln, für die Montage des Hydrolagers, die ausreichend robust sein muss, um Betriebskräfte zu tragen.

Vorzugsweise ist der Lagerdeckel wegen der Kosten und der Verklipsung aus Kunststoff.

Durch das erfindungsgemäße Hydrolager mit einem inneren Lager aus kostengünstigen Kunststoffteilen laufen die normalen Betriebskräfte, wie Lasten der Gummifeder und dynamische Lasten aus der hydraulischen Dämpfung über den Lagerdeckel oder das Anschlaggehäuse und dessen Verbindungspunkte direkt in den Träger.

Das stabile Anschlaggehäuse ist vorzugsweise aus Metall, welches insbesondere Aluminium, Stahl oder Magnesium ist. Das stabile Anschlaggehäuse kann aber auch in geeigneter Gestaltung aus hochwertigem Kunststoff hergestellt sein.

Für den Transport, die Lagerung oder die Handhabung des Motorlagers im unverbauten Zustand sind nur geringe Dichtkräfte durch die Verklipsung aufzubringen. Für die Aufnahme der höheren Betriebskräfte erfolgt die Leitung des Kraftflusses dann nicht mehr über diese Verklipsung sondern über die chassisseitige Befestigung bzw. Verschraubung des Hydrolagers im Fahrzeug, die alle Verklipsungen, die für die Dichtigkeit des inneren Lagers sorgen, und auch diejenigen, die das innere Lager am Anschlaggehäuse festhalten, durch ein Verspannen entlasten. Damit wird es möglich, das Anschlaggehäuse in einer kostengünstigen Aluminium-Standardlegierung zu gießen, weil ein umzuformender Rand entfällt und damit die sehr hohe Dehnfähigkeit des Werkstoffes nicht mehr nötig wird.

Vorzugsweise weist der Lagerdeckel einen Flansch auf und ist mit stützenden Geometrie-Elementen versteift. Diese stützenden Geometrie-Elemente des Lagerdeckels sind insbesondere hohe Stege, die vom Lagerdeckeltopf zum Flansch führen, oder ein außenliegender Stützring, der über Radialstege mit dem Deckeltopf verbunden ist und Klipse zur Verklipsung mit dem Tragkörper umfasst.

### Kurzbeschreibung der Zeichnung

Die angegebenen und weitere Merkmale und Einzelheiten der Erfindung werden einem Fachmann auf dem Gebiet aus der folgenden detaillierten Beschreibung und den beigefügten Zeichnungen klarer werden, die Merkmale der vorliegenden Erfindung anhand eines Beispiels darstellen und wobei:
- Fig. 1: eine aufgeschnittene Schrägansicht eines Hydrolagers gemäß der vorliegenden Erfindung ohne Anschlaggehäuse zeigt;
- Fig. 2: eine aufgeschnittene Schrägansicht des Hydrolagers der Figur 1 mit Anschlaggehäuse zeigt;
- Fig. 3: eine Schnittansicht des Hydrolagers der Figur 2 zeigt;
- Fig. 4: eine aufgeschnittene Schrägansicht eines weiteren Ausführungsbeispiels eines Hydrolagers gemäß der vorliegenden Erfindung zeigt;
- Fig. 5: eine Schnittansicht des Hydrolagers der Figur 4 zeigt.

### Ausführung der Erfindung

Im Folgenden wird die vorliegende Erfindung anhand bevorzugter Ausführungsformen unter Bezugnahme auf die beigefügten Zeichnungen detailliert erklärt.

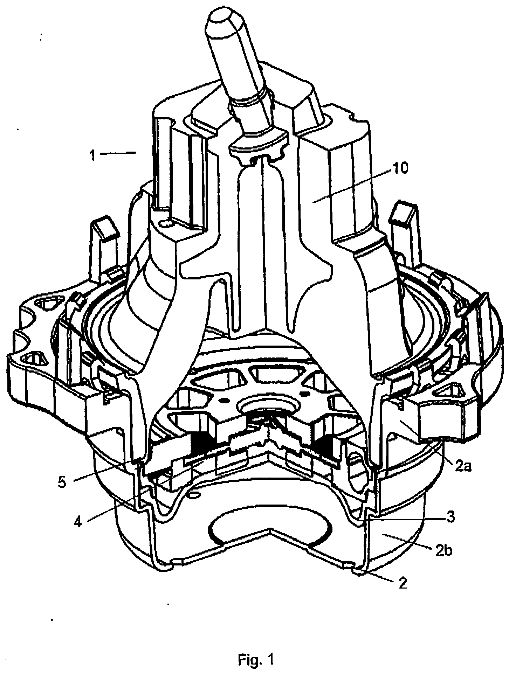

Die Figur 1 zeigt eine aufgeschnittene Schrägansicht eines Hydrolagers gemäß der vorliegenden Erfindung, wobei ein inneres Lager 1 mit einem Lagerdeckel 2, einem Rollbalg 3, einem Düsenkörper 4 und einer Tragfeder 5 als Kunststoffteile gezeigt ist. Ein Tragkörper 10 ist mit dem Lagerdeckel 2 durch eine Verklipsung verbunden. Diese Verbindung sorgt für eine Dichtigkeit des Hydrolagers während eines Transports und wird durch die axiale Verspannung von Lagerdeckel 2, Rollbalg 3, Düsenkörper 4 und Tragfeder 5 erzeugt.

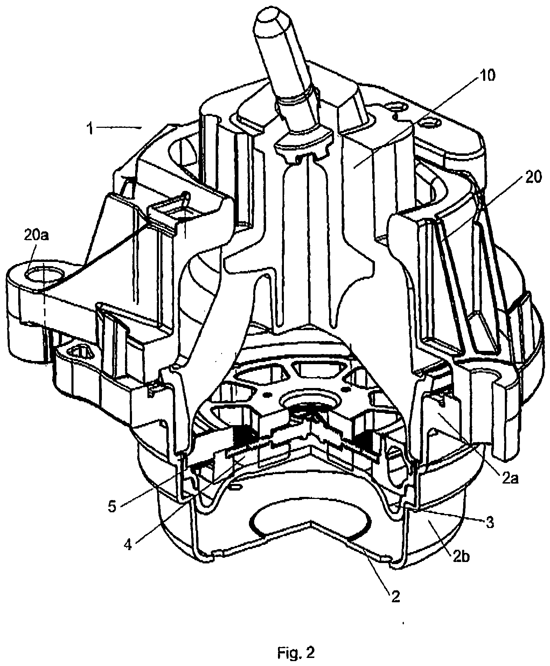

Die Figur 2 zeigt, wie die Figur 1, eine aufgeschnittene Schrägansicht eines Hydrolagers gemäß der vorliegenden Erfindung, wobei zusätzlich zu der Ansicht der Figur 1 ein Anschlaggehäuse 20 vorgesehen ist, das mittels einer Verklipsung mit dem Lagerdeckel 2 verbunden ist.

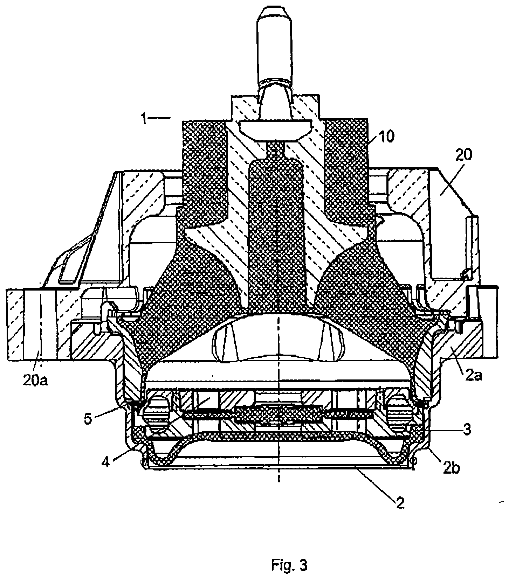

Die Figur 3 zeigt eine Schnittansicht des Hydrolagers der Figur 2.

Bei dem Hydrolager der Figuren 1 bis 3 weist der Lagerdeckel 2 einen Flansch 2a auf und ist mit stützenden Geometrie-Elementen 2b versteift, die in diesem Fall hohe Stege sind, die vom Lagerdeckeltopf zum Flansch 2a führen.

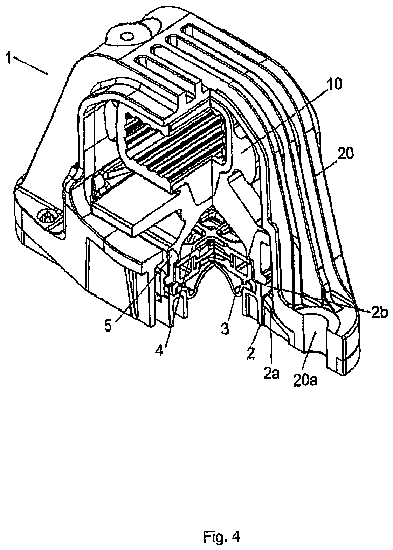

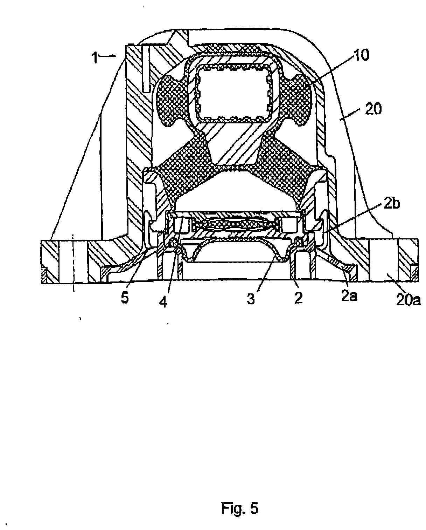

Die Figuren 4 und 5 zeigen ein weiteres Ausführungsbeispiel eines Hydrolagers gemäß der vorliegenden Erfindung in jeweils einer aufgeschnitten Schrägansicht bzw. einer Schnittansicht, wobei gleiche Elemente wie in den Figuren 1 bis 3 mit denselben Bezugszeichen versehen sind und hier nicht weiter diskutiert werden.

Im Unterschied zu dem Hydrolager der Figuren 1 bis 3 ist hier als Geometrie-Element 2b ein außenliegender Stützring vorgesehen, der über Radialstege mit dem Lagerdeckeltopf verbunden ist und Klipse zum Verklipsen mit dem Tragkörper 10 umfasst.

Die erfindungsgemäß entstandene Konstruktion hat durch die Separierung der Kraftflüsse für Dichten, Betriebskräfte und Extremkräfte die Vorteile, leicht zu sein, sich einfach und schnell montieren zu lassen. Sie kann ohne zusätzliche Beschichtungen, die besonders beständig gegen Korrosion sind, und damit zu sehr geringen Kosten hergestellt werden.

## Patentansprüche

1. Hydrolager mit einem inneren Lager (1) aus möglichst vielen Kunststoffteilen, wobei eine Verbindung zwischen einem Lagerdeckel (2), einem Rollbalg (3), einem Düsenkörper (4) und einer Tragfeder (5) als Kunststoffteile und einem Tragkörper (10) durch Verklipsung des Tragkörpers (10) mit dem Lagerdeckel (5) erfolgt, wobei das Hydrolager ein stabiles Anschlaggehäuse (20) aufweist, **dadurch gekennzeichnet, dass** das stabile Anschlaggehäuse (20) an Befestigungsstellen (20a) mittels geeigneter Befestigungselemente mit einem Träger derart verbindbar ist, dass durch diese Verbindung die Verklipsung des inneren Lagers (1) entlastet wird und die wirkenden Betriebskräfte über das Anschlaggehäuse (20) und den Lagerdeckel (2) auf den Träger übertragen werden.

2. Hydrolager nach Anspruch 1, **dadurch gekennzeichnet, dass** der Lagerdeckel (2) aus Kunststoff ist.

3. Hydrolager nach Anspruch 1 oder 2, **dadurch gekennzeichnet, dass** das stabile Anschlaggehäuse (20) aus Metall ist.

4. Hydrolager nach Anspruch 3, **dadurch gekennzeichnet, dass** das Metall Aluminium, Stahl oder Magnesium ist.

5. Hydrolager nach Anspruch 3, **dadurch gekennzeichnet, dass** das stabile Anschlaggehäuse (20) in einer Aluminium-Standardlegierung gegossen ist.

6. Hydrolager nach Anspruch 1 oder 2, **dadurch gekennzeichnet, dass** das stabile Anschlaggehäuse (20) aus hochwertigem Kunststoff ist.

7. Hydrolager nach einem der vorangehenden Ansprüche, **dadurch gekennzeichnet, dass** der Lagerdeckel (2) einen Flansch (2a) aufweist und mit stützenden Geometrie-Elementen (2b) versteift ist.

8. Hydrolager nach Anspruch 7, **dadurch gekennzeichnet, dass** die stützenden Geometrie-Elemente (2b) des Lagerdeckels (2) hohe Stege sind, die vom Lagerdeckeltopf zum Flansch (2a) führen, oder ein außenliegender Stützring, der über Radialstege mit dem Deckeltopf verbunden ist und Klipse zum Verklipsen mit dem Tragkörper (10) umfasst.

9. Hydrolager nach einem der vorangehenden Ansprüche, **dadurch gekennzeichnet, dass** das Anschlaggehäuse (20) auf dem Träger verschraubt ist.

## Claims

1. A hydraulic mount with an inner mount (1) consisting of as many plastic parts as possible, a connection between a mount cover (2), a rolling bellows (3), a nozzle body (4) and a supporting spring (5) as plastic parts and a supporting body (10) being effected by clipping the supporting body (10) to the mount cover (5), wherein the hydraulic mount has a stable stop housing (20), **characterised in that** the stable stop housing (20) can be connected to a carrier at fastening points (20a) by means of suitable fastening elements in such a way that the clipping of the inner bearing (1) is relieved by this connection and the effective operating forces are transmitted to the carrier via the stop housing (20) and the mount cover (2).

2. The hydraulic mount according to claim 1, **characterised in that** the mount cover (2) is made of plastic.

3. The hydraulic mount according to claim 1 or 2, **characterised in that** the stable stop housing (20) is made of metal.

4. The hydraulic mount according to claim 3, **characterised in that** the metal is aluminium, steel or magnesium.

5. The hydraulic mount according to claim 3, **characterised in that** the stable stop housing (20) is cast in a standard aluminium alloy.

6. The hydraulic mount according to claim 1 or 2, **characterised in that** the stable stop housing (20) is made of high-grade plastic.

7. The hydraulic mount according to any one of the preceding claims, **characterised in that** the mount cover (2) has a flange (2a) and is reinforced by supporting geometry elements (2b).

8. The hydraulic mount according to claim 7, **characterised in that** the supporting geometry elements (2b) of the mount cover (2) are tall webs leading from the mount cover pot to the flange (2a), or are an outer support ring which is connected to the cover pot via radial webs and comprises clips for clipping to the support body (10).

9. The hydraulic mount according to any one of the preceding claims, **characterised in that** the stop housing (20) is screwed onto the carrier.

## Revendications

1. Support hydraulique avec un support intérieur (1) composé du plus grand nombre possible de parties plastiques, dans lequel un raccordement entre un couvercle de support (2), un soufflet (3), un corps de buse (4) et un ressort porteur (5) en tant que parties plastiques et un corps porteur (10) est effectué par clipsage du corps porteur (10) avec le couvercle de support (5), dans lequel le support hydraulique présente un boîtier de butée (20) stable, **caractérisé en ce que** le boîtier de butée (20) stable peut être raccordé aux points de fixation (20a) au moyen d'éléments de fixation appropriés à un support de telle manière que par ce raccordement le clipsage du support intérieur (1) soit déchargé et les forces de fonctionnement agissantes soient transmises par le biais du boîtier de butée (20) et du couvercle de support (2) au support.

2. Support hydraulique selon la revendication 1, **caractérisé en ce que** le couvercle de support (2) est en matière plastique.

3. Support hydraulique selon la revendication 1 ou 2, **caractérisé en ce que** le boîtier de butée (20) stable est en métal.

4. Support hydraulique selon la revendication 3, **caractérisé en ce que** le métal est de l'aluminium, de l'acier ou du magnésium.

5. Support hydraulique selon la revendication 3, **caractérisé en ce que** le boîtier de butée (20) stable est coulé dans un alliage standard d'aluminium.

6. Support hydraulique selon la revendication 1 ou 2, **caractérisé en ce que** le boîtier de butée (20) stable est en matière plastique de haute qualité.

7. Support hydraulique selon l'une quelconque des revendications précédentes, **caractérisé en ce que** le couvercle de support (2) présente une bride (2a) et est renforcé avec des éléments de géométrie (2b) d'appui.

8. Support hydraulique selon la revendication 7, **caractérisé en ce que** les éléments de géométrie (2b) d'appui du couvercle de support (2) sont des nervures élevées qui mènent du pot de couvercle de support à la bride (2a), ou un anneau d'appui extérieur qui est raccordé par le biais de nervures radiales au pot de couvercle et comporte des clips pour le clipsage au corps porteur (10).

9. Support hydraulique selon l'une quelconque des revendications précédentes, **caractérisé en ce que** le boîtier de butée (20) est vissé sur le support.
